# EUROPEAN PATENT SPECIFICATION

(11) **EP 4 175 072 B1**
(45) Date of publication and mention of the grant of the patent: **29.10.2025**
(21) Application number: 21812284.4
(22) Date of filing: 21.05.2021
(51) Int. Cl.: H01Q 1/24, H01Q 3/26, H01Q 3/46, H01Q 15/00, H01Q 19/02, H01Q 19/13, H01Q 19/19

(54) **ANTENNA, USE METHOD, AND COMMUNICATION BASE STATION**
ANTENNE, VERWENDUNGSVERFAHREN UND KOMMUNIKATIONSBASISSTATION
ANTENNE, PROCÉDÉ D'UTILISATION, ET STATION DE BASE DE COMMUNICATION

(30) Priority: 29.05.2020 CN 202010476362
(43) Date of publication of application: 03.05.2023
(73) Proprietor: Huawei Technologies Co., Ltd., Longgang District, Shenzhen, Guangdong 518129 (CN)
(72) Inventor: REN, Tianhao, Shenzhen, Guangdong 518129 (CN); CAI, Meng, Shenzhen, Guangdong 518129 (CN); ZENG, Ling, Shenzhen, Guangdong 518129 (CN); CAO, Ping, Shenzhen, Guangdong 518129 (CN)
(74) Representative: Gill Jennings & Every LLP
(86) International application number: PCT/CN2021/095324
(87) International publication number: WO 2021/238815

(56) References cited:
- CN-A- 102 769 211
- CN-A- 103 392 263
- CN-A- 111 052 503
- DE-A1- 10 233 523
- US-A- 4 673 943
- US-A- 4 725 847
- US-A- 6 091 371
- US-A1- 2004 263 408
- US-B1- 10 573 963
- HAUPT R L: "Adaptive Nulling With a Reflector Antenna Using Movable Scattering Elements", IEEE TRANSACTIONS ON ANTENNAS AND PROPAGATION, IEEE, USA, vol. 53, no. 2, 1 February 2005 (2005-02-01), pages 887 - 890, XP011126624, ISSN: 0018-926X, DOI: 10.1109/TAP.2004.841271

## Description

### CROSS-REFERENCE TO RELATED APPLICATIONS

This application claims priority to Chinese Patent Application No. 202010476362.3, filed with China National Intellectual Property Administration on May 29, 2020 and entitled "ANTENNA, USE METHOD, AND COMMUNICATION BASE STATION".

### TECHNICAL FIELD

This application relates to the field of communication technologies, and in particular, to an antenna, a use method, and a communication base station.

### BACKGROUND

In recent years, with increasingly dense microwave backhaul sites, a co-channel interference problem needs to be avoided. For example, when one base station communicates with a plurality of base stations, the base station serves as a master base station. When the base station communicates with the plurality of base stations, a signal transmitted by a base station a may generate interference to a base station b. In a conventional technology, the interference problem is resolved by using a CCIC (Co-Channel Interference Cancellation, co-channel interference cancellation) technology. The CCIC technology refers to comparing both antennas (the base station a and the base station b) with reference, and then implementing interference cancellation through precoding. However, the foregoing interference resolution manner has a limited effect, and is greatly limited.

US 4 725 847 discloses a reflector antenna having an adaptive nulling assembly. The assembly comprises- a disk shaped mounting plate having a shaft aligned with the rotational axis thereof and passing through the main reflector focusing surface. An absorber of electromagnetic energy is affixed to the disk and a microwave grating of metallic elements is positioned on the surface of the absorber. The amplitude of the nulling signal is controlled by rotating the assembly, and the phase of the nulling signal is controlled by the varying height of the grating above the reflector. Additional nulling elements can be used to null multiple interference sources.

US 6 091 371 discloses an electronic scanning reflector antenna and method for using the same.

"Adaptive Nulling With a Reflector Antenna Using Movable Scattering Elements", IEEE TRANSACTIONS ON ANTENNAS AND PROPAGATION, IEEE, USA, vol. 53, no. 2, 1 discloses an adaptive nulling system for reflector antennas that uses a genetic algorithm to mechanically adjust scattering elements in order to place nulls in the sidelobes of cylindrical parabolic reflector antennas.

US 2004/0263408 A1 discloses an adaptive beam forming antenna system using a tunable impedance surface.

US 10 573 963 B1 discloses an adaptive nulling metasurface retrofit.

### SUMMARY

This application provides an antenna, a use method, and a communication base station, to avoid co-channel interference between antennas and improve a communication effect between communication base stations.

According to a first aspect, an antenna is provided. The antenna is configured for communication between communication base stations. The antenna includes a feed, a parasitic array, and a primary reflector. The primary reflector is configured to transmit a signal from the feed, so that the signal transmitted by the feed can be spread to a larger area. The parasitic array is configured to form a null for the signal in a specified direction range. The parasitic array reshapes the antenna signal in the specified direction range, so that the antenna forms a null in the specified direction range, which changes a pattern of the antenna, thereby avoiding mutual interference between communication base stations, and improving a communication effect between communication base stations. In addition, the change does not require reference to another antenna, and interference can be avoided by adjusting only one antenna.

In a specific feasible solution, the antenna may have different forms. For example, a signal transmitting end of the feed of the antenna faces the primary reflector, and the signal transmitted by the feed may be directly reflected by the primary reflector. Alternatively, the antenna further includes a secondary reflector nested in the primary reflector, the signal transmitting end of the feed faces the secondary reflector, and the secondary reflector is configured to reflect, to the primary reflector, the signal transmitted by the feed.

In a specific feasible solution, the secondary reflector is fixedly connected to the feed, and may be understood as a hat-shaped structure formed at the transmitting end of the feed, so that the signal transmitted by the feed is reflected to the primary reflector by the secondary reflector. This makes it convenient to dispose the secondary reflector.

According to the first aspect, there are a plurality of specified direction ranges, the parasitic array is a parasitic array whose impedance is adjustable, and the parasitic array is configured to form a null for the signal in one or some of the plurality of specified direction ranges. With the plurality of specified direction ranges, the parasitic array may reshape the antenna signal in different areas, so that when a communication base station is located at different positions, the parasitic array may be adaptively modified.

In a specific feasible solution, the antenna further includes a control apparatus. The control apparatus is configured to control the parasitic array to form a null in one or some of the plurality of specified direction ranges. Adjustable control over the parasitic array is implemented by using the control apparatus.

In a specific feasible solution, the control apparatus may be disposed in an indoor unit or an outdoor unit. The indoor unit or the outdoor unit is connected to the feed.

In a specific feasible solution, the parasitic array includes a plurality of arrayed metal patches, and in each column of metal patches, adjacent metal patches are connected by using an adjustable impedance component. The parasitic array can be adjusted by using the adjustable impedance component.

In a specific feasible solution, one column of metal patches may be arranged in different directions. For example, an arrangement direction of each column of metal patches is an arrangement direction from an edge of a side wall of the primary reflector to a center of the primary reflector, or deviates a specific angle from the direction from the side wall of the primary reflector to the center of the primary reflector.

In a specific feasible solution, the parasitic array includes a dielectric layer, and the metal patches and the adjustable impedance component are disposed at the dielectric layer.

In a specific feasible solution, when the antenna includes the control apparatus, the control apparatus is configured to control an impedance value of the adjustable impedance component, and control, by controlling the impedance value of the adjustable impedance component, the parasitic array to form a null in one or some of the plurality of specified direction ranges. The parasitic array is controlled by using the control apparatus to be adjustable.

In a specific feasible solution, the control apparatus is further configured to control the impedance value of the adjustable impedance component, and control, by controlling the impedance value of the adjustable impedance component, the parasitic array not to form a null for the signal in one or some of the plurality of specified direction ranges. This improves adaptability of the parasitic array, and reduces impact of the parasitic array on a base station when the base station does not generate signal interference.

In a specific feasible solution, the control apparatus stores a correspondence between the plurality of specified direction ranges and weights of the adjustable impedance component of the parasitic array when a null is generated. The parasitic array can be controlled by using the correspondence to be adjustable.

In a specific feasible solution, the adjustable impedance component may be a variable capacitance diode, a PIN transistor, an MEMS switch, or the like. The parasitic array is controlled by using different components.

In a specific feasible solution, the parasitic array may alternatively be a parasitic array whose impedance is non-adjustable. In this way, when the parasitic array is in a specified direction range, a null can be formed in the specified direction range.

In a specific feasible solution, the parasitic array includes a plurality of arrayed metal patches, and in each column of metal patches, adjacent metal patches are connected by using an impedance component whose impedance value is non-adjustable.

In a specific feasible solution, the impedance component whose impedance value is non-adjustable is one or a combination of a capacitor, a resistor, or an inductor.

In a specific feasible solution, the parasitic array is fixedly connected to the primary reflector by using a bracket.

In a specific feasible solution, an enclosure plate is disposed on the primary reflector, and the enclosure plate is fixedly connected to an end that is of the primary reflector and that is far from the feed.

The bracket is disposed on the enclosure plate.

In a specific feasible solution, the bracket is an adjustable bracket. In this way, the parasitic array can be adjusted in different specified direction ranges to implement a null of the antenna.

In a specific feasible solution, the bracket is a bracket that is retractable in a first direction, and the first direction is parallel to an aperture plane of the primary reflector. In this way, the parasitic array can be adjusted in different specified direction ranges to implement a null of the antenna.

In a specific feasible solution, the bracket is a three-dimensional adjustable bracket. In this way, the parasitic array can be adjusted in different specified direction ranges to implement a null of the antenna.

According to a second aspect, a method for using an antenna is provided. The antenna is the antenna described in any one of the foregoing feasible solutions, and the method includes the following steps:
determining that the antenna generates interference in a specified direction range; and
forming, by using a parasitic array, a null in the specified direction range for a signal transmitted by the antenna.

The parasitic array reshapes the antenna signal in the specified direction range, so that the antenna forms a null in the specified direction range, which changes a pattern of the antenna, thereby avoiding mutual interference between communication base stations, and improving a communication effect between communication base stations. In addition, the change does not require reference to another antenna, and interference can be avoided by adjusting only one antenna.

According to the second aspect, the method further includes:
when there are a plurality of specified direction ranges, using a parasitic array whose impedance is adjustable as the parasitic array; and
adjusting a position of the parasitic array, and/or adjusting the impedance of the parasitic array, to form a null in one or some of the plurality of specified direction ranges for the signal transmitted by the antenna. With the plurality of specified direction ranges, the parasitic array may reshape the antenna signal in different areas, so that when a communication base station is located at different positions, the parasitic array may be adaptively modified.

According to the second aspect, the adjusting the impedance of the parasitic array, to form a null in one or some of the plurality of specified direction ranges for the signal transmitted by the antenna is specifically:
determining, based on a stored correspondence between the plurality of specified direction ranges and weights of an adjustable impedance component of the parasitic array when a null is generated, a corresponding impedance value of the adjustable impedance component of the parasitic array when a null is generated in the one or some specified direction ranges; and
adjusting the impedance of the adjustable impedance component of the parasitic array based on the determined corresponding impedance value of the adjustable impedance component of the parasitic array when a null is generated in the one or some specified direction ranges. The correspondence makes it convenient to adjust the impedance value of the parasitic array.

In a specific feasible solution, the method further includes:
when the antenna does not generate interference in one or some of the plurality of specified direction ranges, controlling the parasitic array not to form a null for the signal in the specified direction range. This expands an application scope of the antenna.

According to a third aspect, a communication base station is provided. The communication base station includes a base station body and the antenna that is described in any one of the foregoing feasible solutions and that is disposed on the base station body. A parasitic array reshapes an antenna signal in a specified direction range, so that the antenna forms a null in the specified direction range, which changes a pattern of the antenna, thereby avoiding mutual interference between communication base stations, and improving a communication effect between communication base stations. In addition, the change does not require reference to another antenna, and interference can be avoided by adjusting only one antenna.

According to a fourth aspect, a communication system is provided, including a first base station, a second base station, and a third base station. The first base station is configured to send a signal to the second base station and the third base station, and the antenna described in any one of the foregoing feasible solutions is disposed on the first base station. A parasitic array reshapes an antenna signal in a specified direction range, so that the antenna forms a null in the specified direction range, which changes a pattern of the antenna, thereby avoiding mutual interference between communication base stations, and improving a communication effect between communication base stations. In addition, the change does not require reference to another antenna, and interference can be avoided by adjusting only one antenna.

### BRIEF DESCRIPTION OF DRAWINGS

FIG. 1 is a schematic diagram of a specific communication process;
FIG. 2 is a schematic diagram of another specific communication process;
FIG. 3a is a schematic diagram of a structure of an antenna according to an embodiment of this application;
FIG. 3b is a schematic diagram of another structure of an antenna according to an embodiment of this application;
FIG. 4 is a schematic diagram of a structure of a parasitic array according to an embodiment of this application;
FIG. 5 is a schematic diagram of a structure of another antenna according to an embodiment of this application;
FIG. 6 is a schematic diagram of a structure of another parasitic array according to an embodiment of this application;
FIG. 7 is a side view of another parasitic array according to an embodiment of this application;
FIG. 8 is a schematic diagram of a structure of another antenna according to an embodiment of this application;
FIG. 9 shows a mapping relationship between a control apparatus and a parasitic array according to an embodiment of this application; and
FIG. 10 to FIG. 13 are waveform simulation diagrams of antennas in different working states.

### DESCRIPTION OF EMBODIMENTS

To make the objectives, technical solutions, and advantages of this application clearer, the following further describes this application in detail with reference to the accompanying drawings.

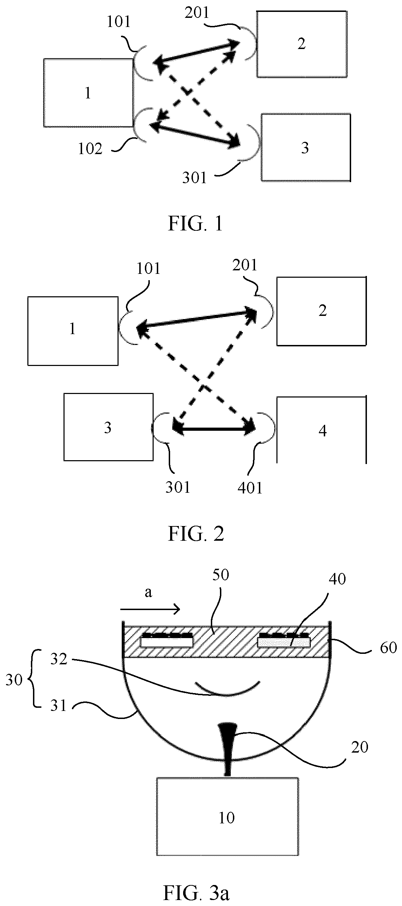

First, an application scenario provided in embodiments of this application is described. An antenna provided in embodiments of this application is used in a communication process of a communication base station. For example, the antenna may be used in a base station in E-band microwave backhaul, a backhaul site in a higher frequency band such as D-band, or a conventional microwave backhaul site. For example, FIG. 1 is a schematic diagram of a specific communication process. A first antenna 101 of a base station 1 communicates with a second antenna 201 of a base station 2 (a signal propagation direction indicated by a solid arrow), and a third antenna 102 of the base station 1 communicates with a fourth antenna 301 of a base station 3 (a signal propagation direction indicated by a solid arrow), thereby forming point-to-multipoint communication. Point-to-point refers to point-to-point fixed beam pointing between two base stations or two antennas, and no scanning is performed between the base stations or the antennas, but only directional signal transmission is performed. When the base station 1, the base station 2, and the base station 3 perform communication in a same band, co-channel interference may exist. In signal propagation directions shown by dashed arrows in FIG. 1, signal transmission may occur between the first antenna 101 and the fourth antenna 301, and signal transmission between the first antenna 101 and the fourth antenna 301 causes interference to a signal between the third antenna 102 and the fourth antenna 301; and signal transmission may occur between the second antenna 201 and the third antenna 102, and signal transmission between the second antenna 201 and the third antenna 102 causes interference to a signal between the first antenna 101 and the second antenna 201.

FIG. 2 is a schematic diagram of another communication process. A first antenna 101 of a base station 1 communicates with a second antenna 201 of a base station 2, and a third antenna 301 of a base station 3 communicates with a fourth antenna 401 of a base station 4. However, during co-channel transmission, in signal propagation directions shown by dashed arrows in FIG. 2, signal transmission may occur between the first antenna 101 and the fourth antenna 401, and signal transmission between the first antenna 101 and the fourth antenna 401 causes interference to a signal between the third antenna 301 and the fourth antenna 401; and signal transmission may occur between the second antenna 201 and the third antenna 301, and signal transmission between the second antenna 201 and the third antenna 301 causes interference to a signal between the first antenna 101 and the second antenna 201.

To avoid co-channel interference between base stations, embodiments of this application provide an antenna. The following describes the antenna in detail with reference to accompanying drawings and specific embodiments.

For example, FIG. 3a is a schematic diagram of a basic structure of an antenna according to an embodiment of this application. The antenna includes a signal processing module 10, a feed 20, and a radiation component 30. When a signal is to be transmitted, the signal processing module 10 transmits the signal to the feed 20, and the feed 20 transmits the signal by using the radiation component 30. When a signal is to be received, the radiation component 30 receives an external signal, and the signal is transmitted to the feed 20 by using the radiation component 30, and then transmitted to the signal processing module 10 by using the feed 20.

The radiation component 30 includes a primary reflector 31 and a secondary reflector 32. The secondary reflector 32 and the primary reflector 31 are configured to cooperate to transmit a signal transmitted by the feed 20. For example, the primary reflector 31 and the secondary reflector 32 use parabolic structures, and the feed 20 is located at a central position of the primary reflector 31. The secondary reflector 32 is nested in the primary reflector 31, and an outer cambered surface of the secondary reflector 32 faces the feed 20. A signal transmitting end of the feed 20 faces the secondary reflector 32, the secondary reflector 32 is configured to reflect, to the primary reflector 31, the signal transmitted by the feed, and the primary reflector 31 is configured to transmit the signal of the feed 20.

In an optional solution, the feed and the secondary reflector may be an integral structure, or the feed and the secondary reflector are connected by using a connector. The signal transmitted by the feed is reflected to the primary reflector by the secondary reflector. For example, the secondary reflector is a hat-shaped structure at the transmitting end of the feed.

When the antenna serves as a transmit antenna, the secondary reflector 32 is configured to reflect, to the primary reflector 31, a signal transmitted by the feed 20, and the primary reflector 31 is configured to transmit the signal that is reflected to the primary reflector 31 by the secondary reflector 32, so that the signal transmitted by feed 20 can be spread into a larger area. When the antenna serves as a receive antenna, an external signal is reflected to the secondary reflector 32 by the primary reflector 31, and then reflected to the feed 20 by the secondary reflector 32. The external signal is a signal transmitted by another antenna or base station.

In an optional solution, the primary reflector 31 and the secondary reflector 32 are axisymmetric structures, and the primary reflector 31 and the secondary reflector 32 are disposed coaxially, so that a signal reflected by the antenna is uniform. The axis may be an axis of the feed 20.

In an optional solution, an enclosure plate 60 is disposed on the primary reflector 31, and the enclosure plate 60 is fixedly connected to an end that is of the primary reflector 31 and that is far from the feed 20. For example, the primary reflector 31 and the enclosure plate 60 may be fixedly connected by using a connector such as a buckle or a threaded connector (a screw or a bolt), or are fixedly connected by bonding or welding, or the enclosure plate 60 and the reflector are integrally formed, for example, directly formed by die casting.

In an optional solution, the antenna further includes a radome 50, and the radome 50 is fixedly connected to the enclosure plate 60, to enclose the feed 20 and the secondary reflector 32 in a space enclosed by the primary reflector 31 and the radome 50.

In an optional solution, the antenna further includes a parasitic array 40, and the parasitic array 40 is fixed in the radome 50. Certainly, the parasitic array 40 may alternatively be fixed outside the radome 50. For example, the parasitic array 40 is fixedly connected to the primary reflector 31 by using a bracket.

The parasitic array 40 is configured to form a null in a specified direction range for a signal transmitted by the feed 20. During specific implementation, the parasitic array 40 is configured to perform reshaping for the antenna. The reshaping means that the parasitic array modifies a pattern of the antenna, so that the pattern of the antenna is shaped into a new shape. The parasitic array 40 is configured to reshape a signal transmitted by the feed 20, including but not limited to: reshaping a signal between the feed 20 and the secondary reflector 32, or reshaping a signal between the secondary reflector 32 and the primary reflector 31; or reshaping a signal reflected by the primary reflector 31. The null indicates that the antenna pattern has an obvious gain decrease in an angular direction or angular direction range. For example, an index requirement for the gain decrease is related to a main lobe gain and an anti-interference capability of an entire system. In the solution of this embodiment, the parasitic array is configured to form a null for a signal in a specified direction range, and interference suppression at the null point (or direction) may be implemented by using a null characteristic of the antenna pattern. The null point (or direction) is a position at which the null is generated.

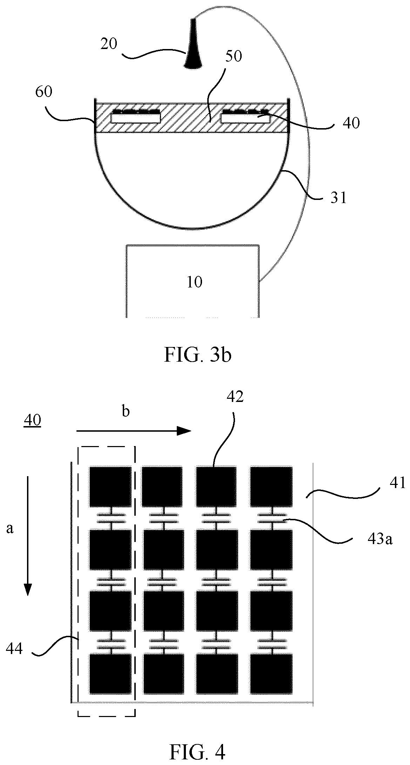

The antenna provided in embodiments of this application is not limited to the antenna shown in FIG. 3a, and may alternatively be another antenna, such as an antenna shown in FIG. 3b. For some reference numerals in FIG. 3b, refer to the same reference numerals in FIG. 3a. In FIG. 3b, the antenna includes only the feed 20 and the primary reflector 31. The primary reflector 31 is configured to transmit a signal from the feed 20. The signal transmitting end of the feed 20 faces the primary reflector 31, and a signal transmitted by the feed 20 is directly reflected by the primary reflector 31.

To facilitate understanding of the parasitic array 40, the following describes a structure of the parasitic array 40 with reference to FIG. 3a and FIG. 4.

For ease of description, a direction a and a direction b are defined. The direction a is a direction from an edge of a side wall of the primary reflector 31 to a center of the primary reflector 31, the direction b is perpendicular to the direction a, and a plane on which the direction a and the direction b are located is parallel to an aperture plane of the primary reflector 31. In FIG. 3a, two parasitic arrays 40 are disposed, to respectively generate nulls in different specified direction ranges. It should be understood that, in this embodiment of this application, a quantity of parasitic arrays 40 is not specifically limited, and the quantity of parasitic arrays 40 may be set based on an actual requirement. For example, the quantity of parasitic arrays 40 is one, two, or three. For example, the parasitic array 40 is disposed in an area in which the antenna may generate an interfering signal.

In an optional solution not forming part of the claimed invention, the parasitic array 40 may be a non-adjustable parasitic array. In the structure shown in FIG. 4, the parasitic array 40 includes a plurality of arrayed metal patches 42, the arrayed metal patches 42 are arranged in rows along the direction a, and arranged in columns along the direction b, and metal patches 42 in each column are arranged in a column along the direction a, as shown by a reference numeral 44 in FIG. 4. In each column of metal patches 42, adjacent metal patches 42 are connected by using an impedance component 43a. For example, in each column of metal patches 42, the metal patches 42 are connected by using an impedance component with a fixed value, for example, one or a combination including one or more of a capacitor, an inductor, a resistor, or a capacitor.

When the parasitic array 40 works, when a signal (electromagnetic wave) reflected by the primary reflector 31 hits the parasitic array 40, a surface current is excited on the parasitic array 40. The surface current may be adjusted by designing a size and a spacing of the metal patches 42 and the impedance component, to affect a pattern of subsequent radiation, and implement beam control, so that the antenna generates a null point in a specified direction range, and reduces a signal propagation effect in the area.

In an optional solution, an arrangement direction of each column of metal patches 42 may deviate a specific angle, such as 1°, 3°, 5°, or 10°, from the direction a.

In an optional solution, the metal patch 42 may be a rectangular metal patch. Certainly, a specific shape of the metal patch 42 is not specifically limited in this application, and metal patches of different shapes such as an oval shape and a round shape may alternatively be used.

In an optional solution, the parasitic array 40 further includes a dielectric layer 41, and the metal patches 42 and the impedance component 43a are disposed on the dielectric layer 41. The dielectric layer 41 is prepared by using a signal-penetrable and insulating material, for example, may be prepared by using a common material such as plastic or fiber. This is not specifically limited in this application. When the parasitic array 40 is prepared, the parasitic array 40 may be prepared in a hybrid integration manner in which an impedance component is soldered after a metal pattern is processed on the dielectric layer 41, or may be fabricated in a single-chip integration form, that is, all parts are integrally processed.

The surface current generated by the parasitic array 40 is related to the size of the metal patches 42 in the parasitic array 40, the spacing between the metal patches 42, an impedance value of the impedance component 43a, and a position of the parasitic array 40. When the parts are specifically disposed, different null states that can be generated under different parameters of the parasitic array 40 may be obtained by solving a Maxwell's equation set in space. The parameters of the parasitic array 40 include: a unit size and spacing of the metal patches 42, a value of interconnection impedance (the impedance component), a position in the antenna, and the like.

In the foregoing description, an example in which the antenna serves as a transmit antenna is used for description. When the antenna serves as a receive antenna, principles are the same, but only signal transmission directions are different.

It can be learned from the foregoing description that, in the technical solution disclosed in this application, the parasitic array reshapes the antenna signal in the specified direction range, so that the antenna forms a null in the specified direction range, which changes a pattern of the antenna, thereby avoiding mutual interference between communication base stations, and improving a communication effect between communication base stations. In addition, the change does not require reference to another antenna, and interference can be avoided by adjusting only one antenna.

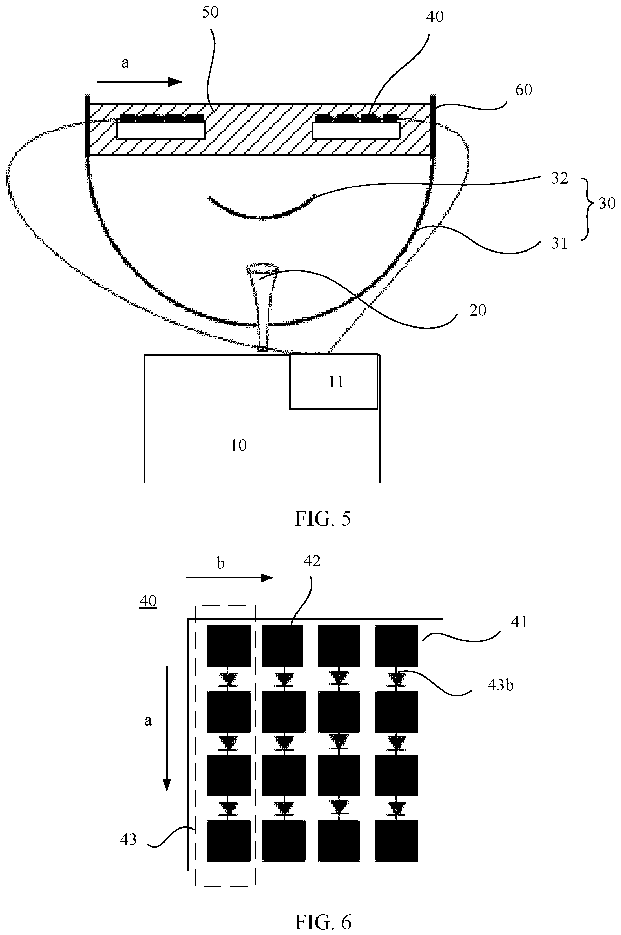

FIG. 5 shows another antenna structure. For reference numerals in FIG. 5, refer to the same reference numerals in FIG. 3a. For example, FIG. 5 shows another null adjustment manner. A difference between the antenna shown in FIG. 5 and the antenna shown in FIG. 3a lies in that the parasitic array 40 is a parasitic array whose impedance is adjustable. When there are a plurality of specified direction ranges, the parasitic array 40 may be a parasitic array whose impedance is adjustable, and the parasitic array 40 forms a null for the signal in one or some of the plurality of specified direction ranges. The parasitic array 40 may be specifically controlled by using a control apparatus 11. For example, when a null needs to be implemented in one or some specified direction ranges, the control apparatus 11 may be configured to control the parasitic array 40 to perform reshaping and form a null in the one or some specified direction ranges for the signal transmitted by the feed 20. For example, when no null is required in the area, the control apparatus 11 may be configured to control the parasitic array 40 not to reshape, in the specified direction range, the signal transmitted by the feed 20. The some specified direction ranges include but are not limited to two or three specified direction ranges.

In an optional solution, the control apparatus 11 may be disposed in the signal processing module 10. The signal processing module 10 may be an indoor unit, an outdoor unit, or a full outdoor unit. The indoor unit, the outdoor unit, or the full outdoor unit is connected to the feed 20. The control apparatus 11 may be a control circuit in the indoor unit, the outdoor unit, or the full outdoor unit. The indoor unit mainly functions to complete service access, multiplexing, modulation and demodulation, and the like, and convert a service signal into a modulated intermediate-frequency analog signal indoors. The outdoor unit mainly functions to complete frequency conversion and amplification for signals, implement conversion between intermediate-frequency signals and radio-frequency signals, and complete frequency conversion between radio-frequency and intermediate-frequency signals and amplify signals to required power outdoors. Alternatively, the full outdoor unit may be used. The full outdoor unit is an integrated full outdoor unit that includes functions of an IDU (In Door Unit, indoor unit) and an ODU (Out Door Unit, outdoor unit).

FIG. 6 is a schematic diagram of a structure of a specific parasitic array 40. The parasitic array 40 includes a plurality of arrayed metal patches 42, the arrayed metal patches 42 are arranged in rows along a direction a, and arranged in columns along a direction b, and metal patches 42 in each column are arranged in a column along a first direction (direction a), as shown by a reference numeral 43 in FIG. 6. Moreover, in each column of metal patches 42, adjacent metal patches 42 are connected by using an adjustable impedance component 43b. For example, the adjustable impedance component 43b may be a variable capacitance diode, a PIN transistor, or an MEMS switch.

In an optional solution, an arrangement direction of each column of metal patches 42 may deviate a specific angle, such as 1°, 3°, 5°, or 10°, from the direction a.

In an optional solution, the metal patch 42 may be a rectangular metal patch. Certainly, a specific shape of the metal patch 42 is not specifically limited in this application, and metal patches of different shapes such as an oval shape and a round shape may alternatively be used.

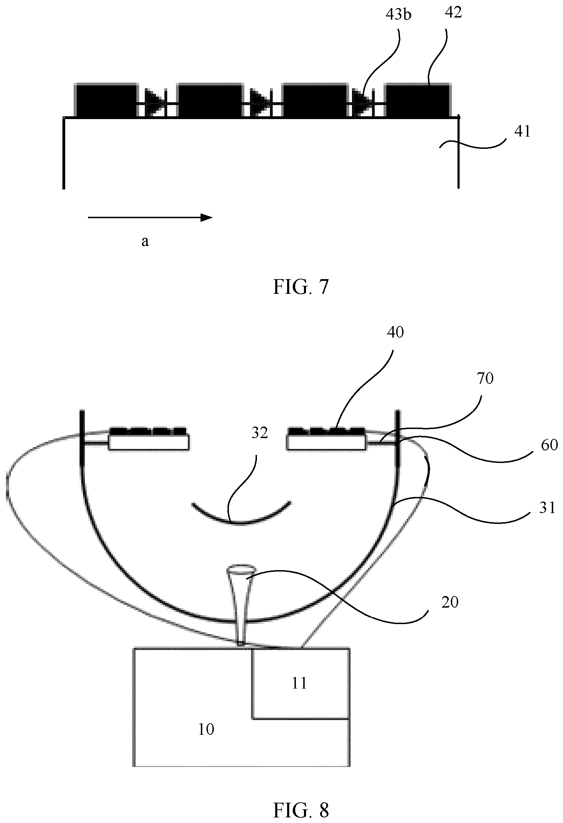

In an optional solution, the parasitic array 40 further includes a dielectric layer 41, and the metal patches 42 and the adjustable impedance component 43b are disposed on the dielectric layer 41. The dielectric layer 41 is prepared by using a signal-penetrable and insulating material, for example, may be prepared by using a common material such as plastic or fiber. This is not specifically limited in this application. With reference to a side view of the parasitic array 40 shown in FIG. 7, when the parasitic array 40 is prepared, the parasitic array 40 may be prepared in a hybrid integration manner in which an impedance component is soldered after a metal pattern is processed on the dielectric layer 41, or may be fabricated in a single-chip integration form, that is, all parts are integrally processed.

When the parasitic array 40 works, when a signal (electromagnetic wave) transmitted by the primary reflector 31 hits the parasitic array 40, a surface current is excited on the parasitic array 40. The surface current may be adjusted by designing a size and a spacing of the metal patches 42 and the adjustable impedance component 43b, to affect a pattern of subsequent radiation, and implement beam control, so that the antenna generates a null in a specified direction range, and reduces a signal propagation effect in the area. It can be learned from the foregoing description that, the surface current generated by the parasitic array 40 is related to the size of the metal patches 42 in the parasitic array 40, the spacing between the metal patches 42, an impedance value of the impedance component, and a position of the parasitic array 40. When the parts are specifically disposed, different null states that can be generated under different parameters of the parasitic array 40 may be obtained by solving a Maxwell's equation set in space (existing mature technology). The parameters of the parasitic array 40 include: a unit size and spacing of the metal patches 42, a value of interconnection impedance, a position in the antenna, and the like. When the parasitic array 40 is a parasitic array whose impedance is adjustable, a null point may be adjusted by adjusting the impedance value of the adjustable impedance component 43b.

In an optional solution, the impedance value of the adjustable impedance component 43b may be adjusted by using the control apparatus. The control apparatus is configured to control the impedance value of the adjustable impedance component 43b, and control, by controlling the impedance value of the adjustable impedance component 43b, the parasitic array 40 to form a null in one or some of the plurality of specified direction ranges for the signal transmitted by the feed 20. The control apparatus is further configured to control the impedance value of the adjustable impedance component 43b, and control, by controlling the impedance value of the adjustable impedance component, the parasitic array 40 not to form a null in one or some of the plurality of specified direction ranges for the signal transmitted by the feed 20. It can be learned from the foregoing description that, the control apparatus may enable, by controlling the adjustable impedance component 43b, the parasitic array 40 to be "transparent" or generate a null. The "transparent" means that the parasitic array 40 does not reshape the signal transmitted by the feed 20, the signal transmitted by the primary reflector 31 may directly penetrate the parasitic array 40, and the parasitic array 40 does not perform reshaping for the antenna.

FIG. 8 is a schematic diagram of a structure of another antenna. The parasitic array 40 in FIG. 8 may use the parasitic array shown in FIG. 4 or FIG. 7. A specific structure of the parasitic array is not described herein again. Each parasitic array 40 is fixedly connected to the primary reflector 31 by using a bracket 70. The parasitic array 40 may be disposed at different positions of the antenna, such as inside or outside the radome. When the parasitic array 40 is located inside the radome, the parasitic array may also be supported by using the bracket 70. In this case, a cavity for accommodating the parasitic array 40 and the radome is disposed in the radome. When the parasitic array 40 is located outside the radome, refer to the structure shown in FIG. 8. The bracket 70 is located in a space enclosed by the enclosure plate 60 and is fixed to the enclosure plate 60, and an end that is of the bracket 70 that is far away from the enclosure plate 60 is fixedly connected to the parasitic array 40. The bracket 70 may be connected to the enclosure plate 60 and the parasitic array 40 by using a connector such as a threaded connector (a bolt or a screw) or a buckle, or the bracket 70 may be connected to the enclosure plate 60 and the parasitic array 40 by bonding, welding, or the like.

In an alternative solution, the bracket 70 is an adjustable bracket, to adjust the position of the parasitic array 40. For example, the bracket 70 is a bracket that is retractable in a first direction (direction a), and the first direction is parallel to an aperture plane of the primary reflector 31. For example, the bracket 70 may be a common structure that is retractable in a specified direction, such as an electric telescopic rod, an air cylinder, or a hydraulic cylinder. When the bracket 70 is stretched, the parasitic array 40 may be adjusted to a position close to the center of the primary reflector 31. When the bracket 70 is retracted, the parasitic array 40 may be adjusted to a position close to the enclosure plate 60. By adjusting the position of the parasitic array 40, an area in which the antenna generates a null can be adjusted. For example, during disposition of base stations, when a position of a base station changes, or a relative position between the base stations is uncertain before the base stations are disposed, after the base stations are disposed, the position of the parasitic array 40 may be adjusted to change an area in which the antenna generates a null, to reduce interference between the base stations, and improve a communication effect between the base stations.

In an optional solution, the bracket 70 is a three-dimensional adjustable bracket, and the bracket 70 is retractable in the direction a, the direction b, and a direction z perpendicular to the direction a and the direction b, to further improve flexibility of adjusting the parasitic array 40, thereby implementing a null of the antenna in different specified direction ranges, and improving a communication effect between antennas. The bracket 70 may use a known structure, for example, a bracket component including three telescopic rods, or another known bracket that can be adjusted in three-dimensional directions, which may be applied to this embodiment of this application.

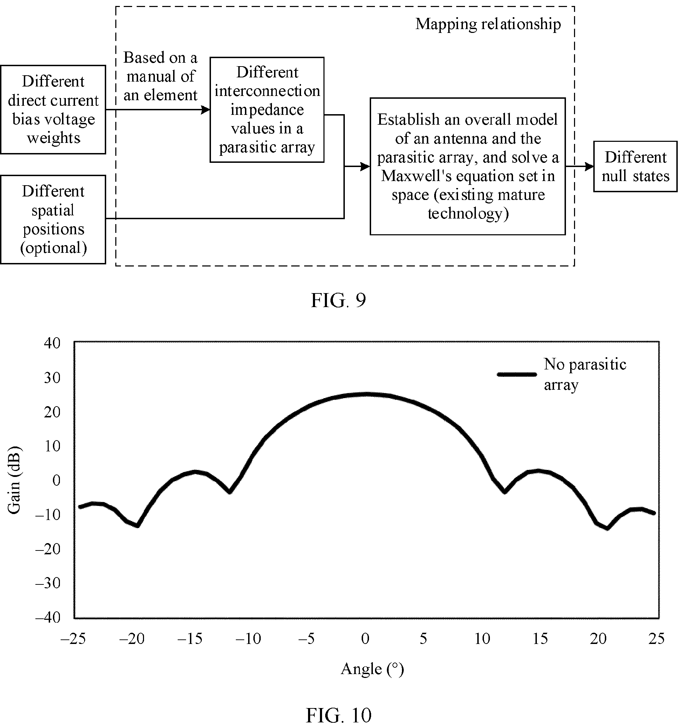

When the bracket 70 is an adjustable bracket, the bracket 70 may also be controlled by using the control apparatus. In this case, the control apparatus specifically controls the adjustable impedance component 43b by using a mapping relationship stored in the control apparatus. A correspondence between a plurality of specified direction ranges and weights of the adjustable impedance component of the parasitic array is stored in the control apparatus. The correspondence is finally presented as a mapping table between different null points and different weights. For a process of establishing the mapping relationship, refer to FIG. 9. The following describes details with reference to FIG. 9.

First, although there are many adjustable parameters for implementing a null of the antenna in this application, for example, in this application, two main parameters are selected as adjustment objects. A first lies in that the control apparatus adjusts the impedance of the adjustable impedance component 43b, and the control apparatus controls the impedance value of the adjustable impedance component 43b by using a generated direct current level. A second lies in that the bracket 70 controls the position of the parasitic array 40 (optional).

Second, for different direct current bias voltages generated by the control apparatus, impedance values under different direct current bias voltages may be obtained based on a manual of a selected adjustable impedance component 43b. In addition, the bracket 70 may adjust the position and a spatial placement angle of the parasitic array 40. An overall electromagnetic model may be established by using a set of weights (an interconnection impedance value and a spatial position) in conjunction with other fixed parameters (such as a dielectric material of the parasitic array 40, the size and the spacing of the metal patches 42, and the structure of the parabolic antenna). A pattern and a null state under the weight are obtained by solving a Maxwell's equation set in space (existing mature technology).

Then, the process is repeated to obtain null states under different weights. In addition, a "transparent weight" is found, that is, under a set of weights, the parasitic array 40 is transparent to an electromagnetic wave and does not function to cancel the electromagnetic wave.

Finally, obtained results are filtered to select a null state meeting a requirement and a corresponding weight. So far, the mapping relationship between weights and null points is established.

When the antenna is used and does not generate interference, the "transparent" weight may be enabled. In this case, the parasitic array 40 is transparent to an electromagnetic wave, and has little impact on a main lobe of an antenna signal. When the antenna generates interference, a "null" weight may be enabled by using the control apparatus, so that the main lobe of the antenna signal decreases slightly, and a null effect is obviously improved. A position of the null point is related to selection of the weight.

To facilitate understanding of the foregoing working principle, an embodiment of this application further provides a use method for an antenna. The antenna may be the antenna described in any one of the foregoing solutions, and the method includes the following steps.

Step 1: Determine that the antenna generates interference in a specified direction range.

Specifically, a range of possible interference between communication base stations may be determined by using positions when the communication base stations are disposed, or when the base stations are used, it is detected, by using a transmitted or received signal, that interference is generated in a range. Step 1 is an optional step. During specific disposition, whether to perform step 1 may be selected based on a requirement.

Step 2:
Form, by using a parasitic array, a null in the specified direction range for a signal transmitted by the antenna.

Specifically, when an antenna on a communication base station generates interference in a fixed specified direction range, a parasitic array that can generate a null for a signal in the specified direction range may be directly installed on the antenna.

When the antenna on the communication base station generates interference in a variable specified direction range, that is, when the communication base station is assembled, a specified direction range in which interference is generated is uncertain, and there are a plurality of areas in which interference is generated, the following manner may be used:
(1) when there are a plurality of specified direction ranges, using a parasitic array whose impedance is adjustable as the parasitic array; and
(2) adjusting a position of the parasitic array, and/or adjusting the impedance of the parasitic array, to form a null in one or some of the plurality of specified direction ranges for the signal transmitted by the antenna.

Specifically, the one or some specified direction ranges are a determined range in which interference is generated when the antenna is used in the plurality of specified direction ranges in which interference may exist. During specific adjustment, the position of the parasitic array may be adjusted, or the impedance of the parasitic array may be adjusted, or both the position and the impedance value of the parasitic array may be adjusted.

For example, only the impedance of the parasitic array is adjusted to form a null in one or some of the plurality of specified direction ranges for the signal transmitted by the antenna. Specific adjustment includes:
determining, based on a stored correspondence between the plurality of specified direction ranges and weights of an adjustable impedance component of the parasitic array when a null is generated, a corresponding impedance value of the adjustable impedance component of the parasitic array when a null is generated in the one or some specified direction ranges; and
adjusting the impedance of the adjustable impedance component of the parasitic array based on the determined corresponding impedance value of the adjustable impedance component of the parasitic array when a null is generated in the one or some specified direction ranges.

For details, refer to a related description of FIG. 9. A pattern and a null state under the weight are obtained by solving a Maxwell's equation set in space. Then, the process is repeated to obtain null states under different weights. Finally, obtained results are filtered to select a null state meeting a requirement and a corresponding weight. So far, the mapping relationship between weights and null points is established. The correspondence makes it convenient to adjust the impedance value of the parasitic array.

In an optional solution, the method further includes finding a "transparent weight" when solving the Maxwell's equation set, that is, under a set of weights, the parasitic array is transparent to an electromagnetic wave and does not function to cancel the electromagnetic wave. When the antenna does not generate interference in one or some of the plurality of specified direction ranges, the parasitic array is controlled not to form a null for the signal in the specified direction range, for example, as in the following scenario: When the communication base station is used, interference is generated in a specified direction range. However, because the position at which the communication base station is disposed changes or the signal that generates interference disappears, the "transparent weight" may be used to cancel the null generated by the parasitic array for the signal in the specified direction range.

It can be learned from the foregoing description that, in the antenna provided in this embodiment of this application, the parasitic array reshapes the antenna signal in the specified direction range, so that the antenna forms a null in the specified direction range, which changes a pattern of the antenna, thereby avoiding mutual interference between communication base stations, and improving a communication effect between communication base stations. In addition, the change does not require reference to another antenna, and interference can be avoided by adjusting only one antenna.

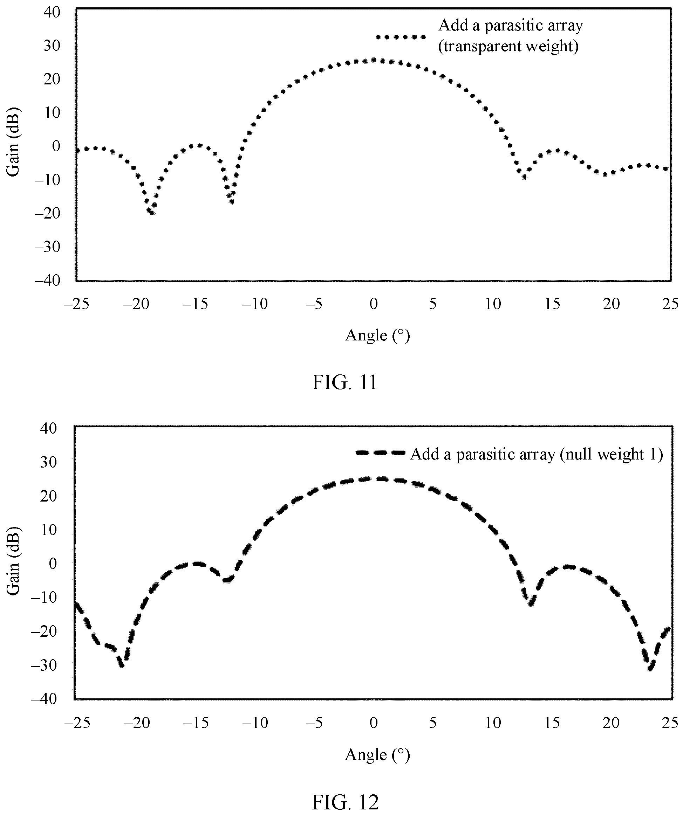

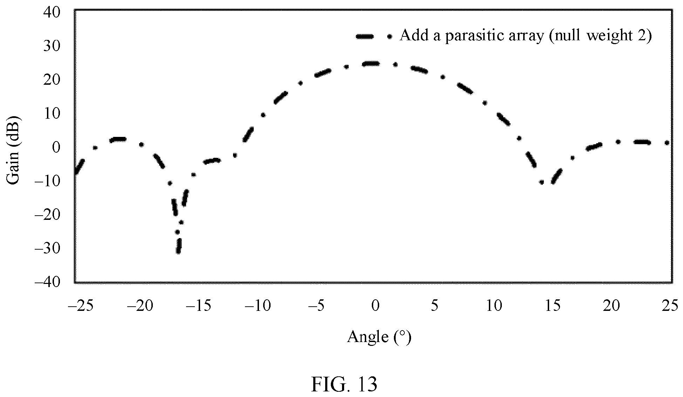

To facilitate understanding of an effect of the parasitic array in this application, the following describes the parasitic array with reference to simulation diagrams in FIG. 10 to FIG. 13. First, refer to FIG. 10. A solid line in FIG. 10 shows a waveform diagram of the antenna without a parasitic array, which is a waveform diagram when the antenna works without a parasitic array. FIG. 11 is a simulation diagram of the antenna including a parasitic array. A dotted line in FIG. 11 indicates a waveform passing through the parasitic array. FIG. 11 is a waveform diagram of the antenna when the parasitic array uses a transparent weight. Upon comparison between FIG. 10 and FIG. 11, it can be learned that when the parasitic array uses the transparent weight, impact on a main lobe is less than 0.3 dB, and the main lobe of the antenna is almost not affected. FIG. 12 is a simulation diagram when the control apparatus applies a null weight 1. FIG. 13 is a simulation diagram when the control apparatus applies a null weight 2. It can be learned from FIG. 12 and FIG. 13 that, when a null weight is applied, the antenna generates an obvious null point within 30°. Simulation results show that a main lobe decrease is less than or equal to 1 dB, a null effect is improved more than 30 dB, and a null point is less than -70 dB relative to the main lobe (simulation is performed by using a small-aperture antenna as an example). In addition, different weights correspond to different null states.

It can be learned from the foregoing description that, in the antenna provided in this application, a null of the antenna may be adjusted by using the parasitic array. When the antenna is used in the scenarios shown in FIG. 1 and FIG. 2, the position of the parasitic array or the value of interconnection impedance may be controlled to adjust the antenna to implement a null in a required area, thereby reducing interference between antennas. In addition, during adjustment, reference to a position of another base station does not need to be provided, and adjustment can be made only by using the antenna, thereby improving freedom of disposing a base station.

This application further provides a communication base station, referring to the base station 1, the base station 2, the base station 3, or the base station 4 in FIG. 1 and FIG. 2. The communication base station includes a base station body and the antenna that is described in any one of the foregoing solutions and that is disposed on the base station body. A parasitic array reshapes an antenna signal in a specified direction range, so that the antenna forms a null in the specified direction range, which changes a pattern of the antenna, thereby avoiding mutual interference between communication base stations, and improving a communication effect between communication base stations. In addition, the change does not require reference to another antenna, and interference can be avoided by adjusting only one antenna.

This application further provides a communication system. Referring to FIG. 1 or FIG. 2, the communication system includes a first base station, a second base station, and a third base station. The first base station is configured to send a signal to the second base station and the third base station, and the antenna described in any one of the foregoing solutions is disposed on the first base station. A parasitic array reshapes an antenna signal in a specified direction range, so that the antenna forms a null in the specified direction range, which changes a pattern of the antenna, thereby avoiding mutual interference between communication base stations, and improving a communication effect between communication base stations. In addition, the change does not require reference to another antenna, and interference can be avoided by adjusting only one antenna.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna, comprising a feed (20), a parasitic array (40), and a primary reflector (31), wherein
the primary reflector (31) is configured to transmit a signal from the feed (20); and
the parasitic array (40) is configured to form a null for the signal in a specified direction range;
**characterized in that** there are a plurality of specified direction ranges, the parasitic array (40) is a parasitic array (40) whose impedance is adjustable, and the parasitic array (40) is configured to form a null for the signal in one or some of the plurality of specified direction ranges.

2. The antenna according to claim 1, wherein
a signal transmitting end of the feed (20) faces the primary reflector (31), and the signal transmitted by the feed (20) is directly reflected by the primary reflector (31); or
the antenna further comprises a secondary reflector nested in the primary reflector (31), the signal transmitting end of the feed (20) faces the secondary reflector, and the secondary reflector is configured to reflect, to the primary reflector (31), the signal transmitted by the feed (20).

3. The antenna according to claim 1 or 2, further comprising a control apparatus, wherein the control apparatus is configured to control the parasitic array (40) to form the null in one or some of the plurality of specified direction ranges.

4. The antenna according to any of claims 1 to 3, wherein the parasitic array (40) comprises a plurality of arrayed metal patches, wherein
in each column of metal patches, adjacent metal patches are connected by using an adjustable impedance component.

5. The antenna according to claim 4, wherein an arrangement direction of each column of metal patches is an arrangement direction from an edge of a side wall of the primary reflector (31) to a center of the primary reflector (31).

6. The antenna according to claim 4 or 5, wherein when the antenna comprises the control apparatus, the control apparatus is configured to control an impedance value of the adjustable impedance component, and control, by controlling the impedance value of the adjustable impedance component, the parasitic array (40) to form the null in one or some of the plurality of specified direction ranges.

7. The antenna according to any one of claims 4 to 6, wherein the control apparatus is further configured to control the impedance value of the adjustable impedance component, and control, by controlling the impedance value of the adjustable impedance component, the parasitic array (40) not to form the null for the signal in one or some of the plurality of specified direction ranges.

8. The antenna according to claim 6 or 7, wherein the control apparatus is configured to store a correspondence between the plurality of specified direction ranges and weights of the adjustable impedance component of the parasitic array (40) when the null is generated.

9. The antenna according to any of claims 4 to 8, wherein the adjustable impedance component is a variable capacitance diode, a PIN transistor, or a MEMS switch.

10. The antenna according to any one of claims 1 to 9, wherein the parasitic array (40) is fixedly connected to the primary reflector (31) by using a bracket.

11. A method for using an antenna, comprising:
determining that the antenna generates interference in a specified direction range; and
forming, by using a parasitic array (40), a null in the specified direction range for a signal transmitted by the antenna;
**characterized in that** the method further comprises:
when there are a plurality of specified direction ranges, using a parasitic array (40) whose impedance is adjustable as the parasitic array (40); and
adjusting a position of the parasitic array (40), and/or adjusting the impedance of the parasitic array (40), to form a null in one or some of the plurality of specified direction ranges for the signal transmitted by the antenna;
wherein the adjusting the impedance of the parasitic array (40), to form the null in one or some of the plurality of specified direction ranges for the signal transmitted by the antenna is specifically:
determining, based on a stored correspondence between the plurality of specified direction ranges and weights of an adjustable impedance component of the parasitic array (40) when the null is generated, a corresponding impedance value of the adjustable impedance component of the parasitic array (40) when the null is generated in the one or some specified direction ranges; and
adjusting the impedance of the adjustable impedance component of the parasitic array (40) based on the determined corresponding impedance value of the adjustable impedance component of the parasitic array (40) when the null is generated in the one or some specified direction ranges.

12. The method according to claim 11, wherein the method further comprises:
when the antenna does not generate interference in one or some of the plurality of specified direction ranges, controlling the parasitic array (40) not to form the null for the signal in the specified direction range.

13. A communication base station, comprising a base station body and the antenna, disposed on the base station body, according to any one of claims 1 to 10**.**

## Patentansprüche

1. Antenne, bestehend aus einer Einspeisung (20), einem parasitären Array (40) und einem Primärreflektor (31), wobei
der Primärreflektor (31) ist so konfiguriert, dass er ein Signal von der Einspeisung (20) überträgt; und
das parasitäre Array (40) so konfiguriert ist, dass es in einem festgelegten Richtungsbereich eine Null für das Signal bildet;
**dadurch gekennzeichnet, dass** es eine Vielzahl von spezifizierten Richtungsbereichen gibt, das parasitäre Array (40) ein parasitäres Array (40) ist, dessen Impedanz einstellbar ist, und das parasitäre Array (40) so konfiguriert ist, dass es in einem oder einigen der Vielzahl von spezifizierten Richtungsbereichen eine Null für das Signal bildet.

2. Antenne nach Anspruch 1, wobei
ein signalübertragendes Ende der Einspeisung (20) ist dem Primärreflektor (31) zugewandt, und das von der Zuleitung (20) übertragene Signal direkt vom Primärreflektor (31) reflektiert wird; oder
die Antenne ferner einen Sekundärreflektor umfasst, der in den Primärreflektor (31) eingebettet ist, wobei das signalübertragende Ende der Einspeisung (20) dem Sekundärreflektor zugewandt ist und der Sekundärreflektor so konfiguriert ist, dass er das von der Einspeisung (20) übertragene Signal zum Primärreflektor (31) reflektiert.

3. Antenne nach Anspruch 1 oder 2, die ferner umfassend eine Steuervorrichtung, wobei die Steuervorrichtung dazu konfiguriert ist, das parasitäre Array (40) zu steuern, um die Nullstelle in einem oder einigen der Vielzahl von angegebenen Richtungsbereichen zu bilden.

4. Antenne nach einem der Ansprüche 1 bis 3, wobei das parasitäre Array (40) eine Vielzahl von angeordneten Metallpatches umfasst, wobei
in jeder Spalte aus Metallpatches benachbarte Metallpatches mithilfe einer einstellbaren Impedanzkomponente verbunden werden.

5. Antenne nach Anspruch 4, wobei eine Anordnungsrichtung jeder Spalte aus Metallpatches eine Anordnungsrichtung von einer Kante einer Seitenwand des Primärreflektors (31) zu einer Mitte des Primärreflektors (31) ist.

6. Antenne nach Anspruch 4 oder 5, wobei, wenn die Antenne die Steuervorrichtung umfasst, die Steuervorrichtung dazu konfiguriert ist, einen Impedanzwert der einstellbaren Impedanzkomponente zu steuern und durch Steuern des Impedanzwerts der einstellbaren Impedanzkomponente das parasitäre Array (40) zu steuern, um die Nullstelle in einem oder einigen der Vielzahl von angegebenen Richtungsbereichen zu bilden.

7. Antenne nach einem der Ansprüche 4 bis 6, wobei die Steuervorrichtung ferner dazu konfiguriert ist, den Impedanzwert der einstellbaren Impedanzkomponente zu steuern und durch Steuern des Impedanzwerts der einstellbaren Impedanzkomponente das parasitäre Array (40) so zu steuern, dass es in einem oder mehreren der Vielzahl von angegebenen Richtungsbereichen nicht die Nullstelle für das Signal bildet.

8. Antenne nach Anspruch 6 oder 7, wobei die Steuervorrichtung dazu konfiguriert ist, eine Entsprechung zwischen der Vielzahl von spezifizierten Richtungsbereichen und Gewichten der einstellbaren Impedanzkomponente des parasitären Arrays (40) zu speichern, wenn die Null erzeugt wird.

9. Antenne nach einem der Ansprüche 4 bis 8, wobei die einstellbare Impedanzkomponente eine Diode mit variabler Kapazität, ein PIN-Transistor oder ein MEMS-Schalter ist.

10. Antenne nach einem der Ansprüche 1 bis 9, wobei das parasitäre Array (40) unter Verwendung einer Halterung fest mit dem Primärreflektor (31) verbunden ist.

11. Verfahren zum Verwenden einer Antenne, umfassend:
Bestimmen, dass die Antenne in einem bestimmten Richtungsbereich Störungen erzeugt; und
Bilden einer Nullstelle im angegebenen Richtungsbereich für ein von der Antenne gesendetes Signal durch Verwendung eines parasitären Arrays (40);
**dadurch gekennzeichnet, dass** das Verfahren ferner Folgendes umfasst:
bei einer Vielzahl von vorgegebenen Richtungsbereichen ein parasitäres Array (40) mit einstellbarer Impedanz als parasitäres Array (40) verwendet wird; und
Anpassen einer Position des parasitären Arrays (40) und/oder Anpassen der Impedanz des parasitären Arrays (40), um in einem oder einigen der Vielzahl von angegebenen Richtungsbereichen für das von der Antenne gesendete Signal eine Nullstelle zu bilden;
wobei das Anpassen der Impedanz des parasitären Arrays (40) zum Bilden der Nullstelle in einem oder einigen der Vielzahl von spezifizierten Richtungsbereichen für das von der Antenne gesendete Signal insbesondere folgendes ist:
Bestimmen eines entsprechenden Impedanzwerts der einstellbaren Impedanzkomponente des parasitären Arrays (40), wenn die Null in dem einen oder einigen der angegebenen Richtungsbereiche erzeugt wird, basierend auf einer gespeicherten Entsprechung zwischen der Vielzahl der angegebenen Richtungsbereiche und Gewichtungen einer einstellbaren Impedanzkomponente des parasitären Arrays (40), wenn die Null erzeugt wird; und
Anpassen der Impedanz der einstellbaren Impedanzkomponente des parasitären Arrays (40) basierend auf dem ermittelten entsprechenden Impedanzwert der einstellbaren Impedanzkomponente des parasitären Arrays (40), wenn die Null in dem einen oder einigen angegebenen Richtungsbereichen erzeugt wird.

12. Verfahren nach Anspruch 11, wobei das Verfahren ferner Folgendes umfasst:
wenn die Antenne in einem oder mehreren der Vielzahl von spezifizierten Richtungsbereichen keine Interferenzen erzeugt, Steuern des parasitären Arrays (40), um für das Signal im spezifizierten Richtungsbereich keine Null zu bilden.

13. Kommunikationsbasisstation, die einen Basisstationskörper und die auf dem Basisstationskörper angeordnete Antenne nach einem der Ansprüche 1 bis 10 umfasst.

## Revendications

1. Antenne, comprenant une alimentation (20), un réseau parasite (40) et un réflecteur principal (31), dans laquelle
le réflecteur principal (31) est configuré pour transmettre un signal provenant de l'alimentation (20) ; et
le réseau parasite (40) est configuré pour former une valeur nulle pour le signal dans une plage de direction spécifiée ;
**caractérisée en ce qu'**il existe une pluralité de plages de direction spécifiées, le réseau parasite (40) est un réseau parasite (40) dont l'impédance est réglable, et le réseau parasite (40) est configuré pour former une valeur nulle pour le signal dans une ou certaines de la pluralité de plages de direction spécifiées.

2. Antenne selon la revendication 1, dans laquelle
une extrémité de transmission de signal de l'alimentation (20) fait face au réflecteur principal (31), et le signal transmis par l'alimentation (20) est directement réfléchi par le réflecteur principal (31) ; ou
l'antenne comprend également un réflecteur secondaire imbriqué dans le réflecteur principal (31), l'extrémité de transmission de signal de l'alimentation (20) fait face au réflecteur secondaire, et le réflecteur secondaire est configuré pour réfléchir, vers le réflecteur principal (31), le signal transmis par l'alimentation (20).

3. Antenne selon la revendication 1 ou 2, comprenant également un appareil de commande, dans laquelle l'appareil de commande est configuré pour commander le réseau parasite (40) afin de former la valeur nulle dans une ou certaines de la pluralité de plages de direction spécifiées.

4. Antenne selon l'une quelconque des revendications 1 à 3, dans laquelle le réseau parasite (40) comprend une pluralité de plaques métalliques disposées en réseau, dans laquelle dans chaque colonne de plaques métalliques, les plaques métalliques adjacentes sont connectées à l'aide d'un composant d'impédance réglable.

5. Antenne selon la revendication 4, dans laquelle une direction d'agencement de chaque colonne de plaques métalliques est une direction d'agencement allant d'un bord d'une paroi latérale du réflecteur principal (31) à un centre du réflecteur principal (31).

6. Antenne selon la revendication 4 ou 5, dans laquelle lorsque l'antenne comprend l'appareil de commande, l'appareil de commande est configuré pour commander une valeur d'impédance du composant d'impédance réglable, et commander, en commandant la valeur d'impédance du composant d'impédance réglable, le réseau parasite (40) pour former la valeur nulle dans une ou certaines de la pluralité de plages de direction spécifiées.

7. Antenne selon l'une quelconque des revendications 4 à 6, dans laquelle l'appareil de commande est également configuré pour commander la valeur d'impédance du composant d'impédance réglable, et commander, en commandant la valeur d'impédance du composant d'impédance réglable, le réseau parasite (40) pour ne pas former la valeur nulle pour le signal dans une ou certaines de la pluralité de plages de direction spécifiées.

8. Antenne selon la revendication 6 ou 7, dans laquelle l'appareil de commande est configuré pour stocker une correspondance entre la pluralité de plages de direction spécifiées et les poids du composant d'impédance réglable du réseau parasite (40) lorsque la valeur nulle est générée.

9. Antenne selon l'une quelconque des revendications 4 à 8, dans laquelle le composant d'impédance réglable est une diode à capacité variable, un transistor PIN, ou un commutateur MEMS.

10. Antenne selon l'une quelconque des revendications 1 à 9, dans laquelle le réseau parasite (40) est connecté de manière fixe au réflecteur principal (31) à l'aide d'un support.

11. Procédé d'utilisation d'une antenne, comprenant :
la détermination que l'antenne génère des interférences dans une plage de direction spécifiée ; et
la formation, à l'aide d'un réseau parasite (40), d'une valeur nulle dans la plage de direction spécifiée pour un signal transmis par l'antenne ;
**caractérisé en ce que** le procédé comprend également :
lorsqu'il existe une pluralité de plages de direction spécifiées, l'utilisation d'un réseau parasite (40) dont l'impédance est réglable comme réseau parasite (40) ; et
le réglage d'une position du réseau parasite (40), et/ou le réglage de l'impédance du réseau parasite (40), pour former une valeur nulle dans une ou certaines de la pluralité de plages de direction spécifiées pour le signal transmis par l'antenne ;
dans lequel le réglage de l'impédance du réseau parasite (40), pour former la valeur nulle dans une ou certaines de la pluralité de plages de direction spécifiées pour le signal transmis par l'antenne est spécifiquement :
la détermination, sur la base d'une correspondance stockée entre la pluralité de plages de direction spécifiées et les poids d'un composant d'impédance réglable du réseau parasite (40) lorsque la valeur nulle est générée, d'une valeur d'impédance correspondante du composant d'impédance réglable du réseau parasite (40) lorsque la valeur nulle est générée dans les une ou certaines plages de direction spécifiées ; et
le réglage de l'impédance du composant d'impédance réglable du réseau parasite (40) sur la base de la valeur d'impédance correspondante déterminée du composant d'impédance réglable du réseau parasite (40) lorsque la valeur nulle est générée dans les une ou certaines plages de direction spécifiées.

12. Procédé selon la revendication 11, dans lequel le procédé comprend également :
lorsque l'antenne ne génère pas d'interférence dans une ou certaines de la pluralité de plages de direction spécifiées, la commande du réseau parasite (40) pour ne pas former la valeur nulle pour le signal dans la plage de direction spécifiée.

13. Station de base de communication, comprenant un corps de station de base et l'antenne, disposée sur le corps de station de base, selon l'une quelconque des revendications 1 à 10.
